# EUROPÄISCHE PATENTSCHRIFT

(11) **EP 2 637 005 B1**
(45) Veröffentlichungstag und Bekanntmachung des Hinweises auf die Patenterteilung: **29.12.2021**
(21) Anmeldenummer: 13153280.6
(22) Anmeldetag: 30.01.2013
(51) Int. Cl.: G01J 5/30, G01J 1/44, G01J 5/24

(54) **Verfahren zum seriellen Auslesen von elektrischen Messelementen**
Method for the serial reading of electrical measuring elements
Procédé de lecture en série d'éléments de mesure électriques

(30) Priorität: 06.03.2012 DE 102012203488
(43) Veröffentlichungstag der Anmeldung: 11.09.2013
(73) Patentinhaber: Robert Bosch GmbH, 70442 Stuttgart (DE)
(72) Erfinder: Junger, Andreas, 72770 Reutlingen (DE); Nitsche, Juergen, 72501 Gammertingen (DE)

(56) Entgegenhaltungen:
- EP-A2- 1 241 456
- US-A- 5 512 750
- US-A1- 2004 200 962

## Beschreibung

Die vorliegende Erfindung betrifft ein Verfahren zum seriellen Auslesen von elektrischen Messelementen.

### Stand der Technik

Serielles Auslesen von Messsignalen in einem Feld von Messelementen durch serielle Bestromung und Verstärkung der Signale ist bekannt.

Dabei werden die Messelemente jeweils mittels Schalter ausgewählt, mittels eines Stroms aktiviert und mittels eines Verstärkers verstärkt und ausgegeben. Anschließend werden die Schalter des ausgelesenen Elements wieder geöffnet und die des nächsten Elements geschlossen, dabei wieder bestromt und verstärkt. Der Vorgang wiederholt sich, bis alle Elemente selektiert und ausgegeben sind. Bei einer gegebenen Taktfrequenz muss der Verstärker dabei eine hohe Bandbreite aufweisen, um die Signale ausreichend schnell ausgeben zu können. Durch die hohe Bandbreite werden nachteilig aber auch die Rauschanteile der Messelemente aufintegriert und verstärkt. Dies ist insbesondere bei kleinen Signalen ungünstig, da bei derartigen Signalen ein Rauschanteil in der Größenordnung des Nutzsignals liegen kann. Ein weiteres Verfahren und eine Vorrichtung zum Auslesen eines Messfeldes von Bolometern ist z.B. in der EP 1 241 456 A2 offenbart.

### Offenbarung der Erfindung

Es ist daher die Aufgabe der Erfindung, ein verbessertes Verfahren zum seriellen Auslesen von Messelementen bereitzustellen.

Die Aufgabe wird gelöst mit einem Verfahren zum seriellen Auslesen von elektrischen Messelementen nach Anspruch 1, sowie einer Vorrichtung nach Anspruch 6. Das Verfahren gemäß der Erfindung hat den Vorteil, dass jedes der Messeelemente vor dem Auslesen wenigstens einen Takt lang vorbestromt und dadurch vorkonditioniert wird. Auf diese Weise kann sich das Messelement gemeinsam mit dem mit dem Messelement elektrisch verbundenen Verstärker ausreichend lange elektrisch einschwingen, so dass eine Ausgabe der Messsignale der Messelemente genauer und mit weniger Rauschanteilen durchgeführt werden kann. Zudem kann eine Bandbreite der verwendeten Verstärker vorteilhaft reduziert werden, was sich in günstigen Kosteneffekten auswirkt.

Eine bevorzugte Ausführungsform des Verfahrens sieht vor, dass eine Anzahl der Verstärker von 2 bis N skalierbar ist, wobei für jeden Takt eines Bestromens der Messeelemente vor dem Auslesen ein zusätzlicher Verstärker vorgesehen ist. Vorteilhaft kann dadurch ein Einschwingen der Messelemente und damit eine Genauigkeit der Messsignale durch Auswahl einer geeigneten Anzahl von Verstärkern optimiert werden.

Eine bevorzugte Ausführungsform des Verfahrens sieht vor, dass die Messelemente in wenigstens zwei Reihen angeordnet sind, wobei das Verfahren für jede Reihe nacheinander ausgeführt wird. Dadurch kann das Verfahren vorteilhaft auch für Felder bzw. Arrays von Messelementen durchgeführt werden, wodurch ein erweiterter Anwendungsbereich des erfindungsgemäßen Verfahrens unterstützt ist.

Eine bevorzugte Ausführungsform des Verfahrens sieht vor, dass die Verstärker derart dimensioniert sind, dass sie Frequenzen nur bis zu einer vorbestimmten Frequenz übertragen. Durch eine dadurch bewirkte Bandbreitenreduktion der verwendeten Verstärker können Übertragungserfordernisse für die Messsignale vorteilhaft optimiert werden.

Eine bevorzugte Ausführungsform des erfindungsgemäßen Verfahrens sieht vor, dass mittels der ersten Schalter differenzielle Signale an die Verstärker angeschaltet werden. Dadurch können neben Absolutwerten auch Relativwerte der Messsignale ausgelesen wird, wodurch im Prinzip eine alternative Art der Ausführung des Verfahrens unterstützt ist.

Die Erfindung wird im Folgenden mit weiteren Merkmalen und Vorteilen anhand von mehreren Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:
- Fig. 1a bis 1c: eine prinzipielle Darstellung eines seriellen Auslesens von elektrischen Messelementen gemäß Stand der Technik;
- Fig. 2a bis 2h: prinzipielle Darstellungen eines seriellen Auslesens von elektrischen Messelementen gemäß einer ersten Ausführungsform der vorliegenden Erfindung; und
- Fig. 3: eine vereinfachte Darstellung einer Anordnung für eine weitere Ausführungsform des erfindungsgemäßen Verfahrens.

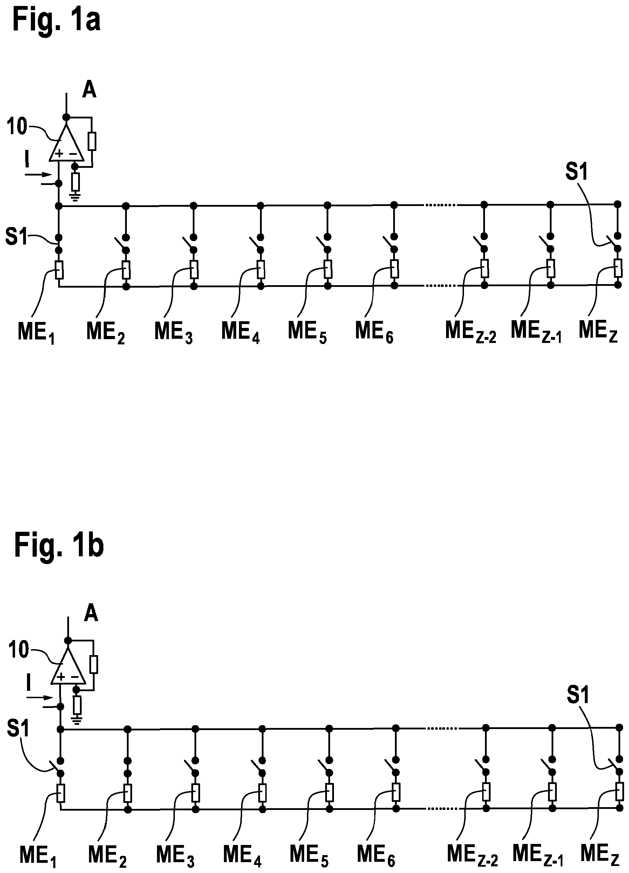

Fig. 1a zeigt ein eine prinzipielle Darstellung eines seriellen Auslesens von elektrischen Messelementen gemäß Stand der Technik. Eine Reihe von Messelementen ME₁ ... ME_{z} (beispielsweise elektrische Widerstände, Dioden, etc.) sind an einen Eingang eines Verstärkers 10 schaltbar ausgebildet. Mit jedem der Messeelemente ME₁ bis ME_{Z} ist ein erster Schalter S1 in Serie geschaltet, mit dessen Hilfe die Messeelemente ME₁ bis ME_{Z} nacheinander an den Eingang des Verstärkers 10 angeschaltet und mittels des Verstärkers 10 an eine Ausleseposition A ausgegeben werden können. Fig. 1a zeigt das Auslesen des Messelements ME₁ mittels des geschlossenen ersten Schalters S1. Ein elektrischer Spannungsabfall, der mittels des Messstroms I (beispielsweise ein Konstantstrom aus einer Konstantstromquelle) am Messelement ME₁ erzeugt wird, wird über den Verstärker 10 an der Ausleseposition A ausgegeben. Die ersten Schalter S1 der übrigen Messelemente ME₂ bis MEz sind in diesem Stadium geöffnet.

Fig. 1b zeigt den nächsten Takt des konventionellen Auslesens von Messelementen. Man erkennt, dass nunmehr ein erster Schalter S1, der mit dem Messelement ME₂ in Serie geschaltet ist, an den Verstärker 10 angeschaltet ist. Auf diese Weise wird eine elektrische Spannung, die mittels des Messstroms I am Messelement ME₂ abfällt, über den Verstärker 10 ausgegeben.

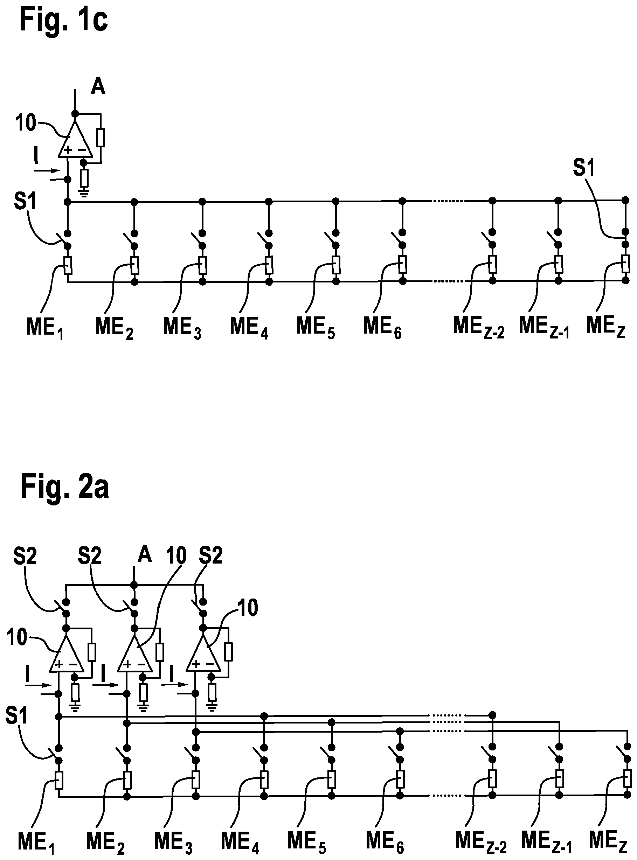

Fig. 1c zeigt in einem weiteren Takt des konventionellen seriellen Auslesens das Auslesen des Messelements ME_{z} mittels des zugeordneten ersten Schalters S1 und des Verstärkers 10. Man erkennt, dass alle Messelemente ME₁ bis ME_{z} unmittelbar nacheinander getaktet ausgelesen werden, wodurch der Verstärker 10 eine hohe Bandbreite aufweisen muss. Dies bewirkt in nachteiliger Weise ein Aufintegrieren von Rauschanteilen im Messsignal und dadurch eine Ungenauigkeit des ausgegebenen Messsignals. Nachteilig muss der Verstärker 10 sehr breitbandig ausgelegt werden, damit die einzelnen Werte genügend genau ausgegeben werden können.

Aufgrund der geringen Stromstärke des Stroms I, um das Messelement nicht unnötig zu erwärmen, kann ein Rauschanteil in der Größenordnung der elektrischen Messspannung liegen. Dadurch wird das Rauschen mittels des Verstärkers 10 ungewollt mit verstärkt, was auch durch eine hohe Bandbreite des Verstärkers 10 verursacht ist. Die genannte hohe Bandbreite ist aufgrund der schnellen Taktung (vorzugsweise im Mikrosekundenbereich) des Schalters S1 und den unter Umständen unterschiedlich hohen elektrischen Spannungsabfällen an den Messelementen erforderlich.

Erfindungsgemäß wird nunmehr eine Verlängerung von Bestromungszeiten der Messelemente vor den eigentlichen Auslesevorgängen vorgeschlagen.

Fig. 2a zeigt prinzipiell ein Startszenario einer Anordnung für das erfindungsgemäße Verfahren. Man erkennt, dass dafür nunmehr drei Verstärker 10 an jeweils eine Gruppe von drei Messelementen ME₁...ME_{z} anschaltbar sind. Drei zweite Schalter S2 bilden einen 3-zu-1 Multiplexer, um jeweils einen verstärkten Ausgangswert des Messsignals am Verstärker 10 an die Ausleseposition A auszugeben. Drei im Wesentlichen gleich große Messströme I werden zugleich an jeweils einen Eingang der Verstärker 10 eingespeist. Die ersten Schalter S1 sind allesamt geöffnet, ebenso wie die zweiten Schalter S2 des 3-zu-1 Multiplexers, so dass die Messelemente ME₁...ME_{z} nicht bestromt werden und somit auch kein elektrischer Spannungsabfall an den Messelementen ME₁...ME_{z} generiert wird.

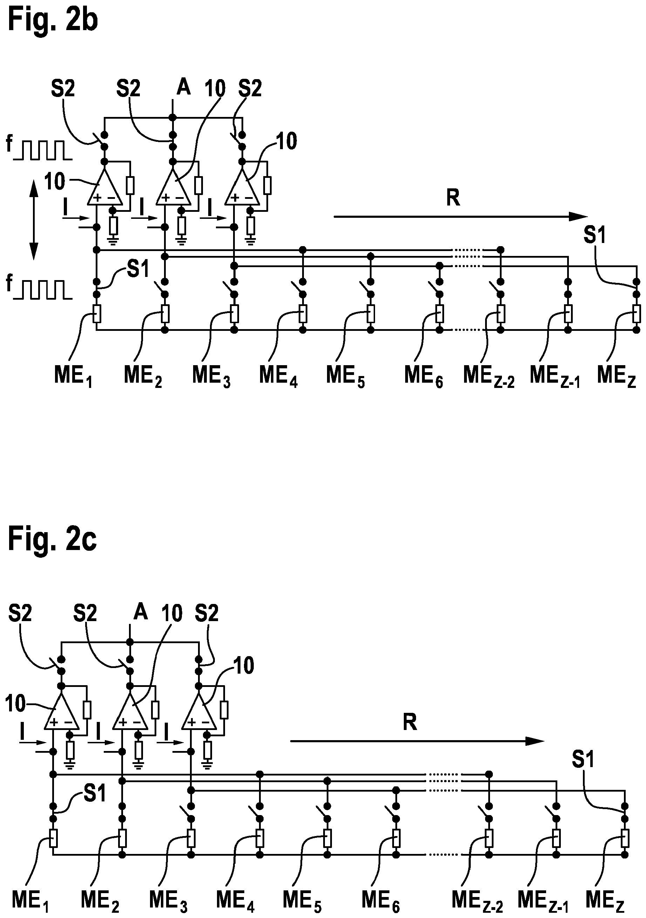

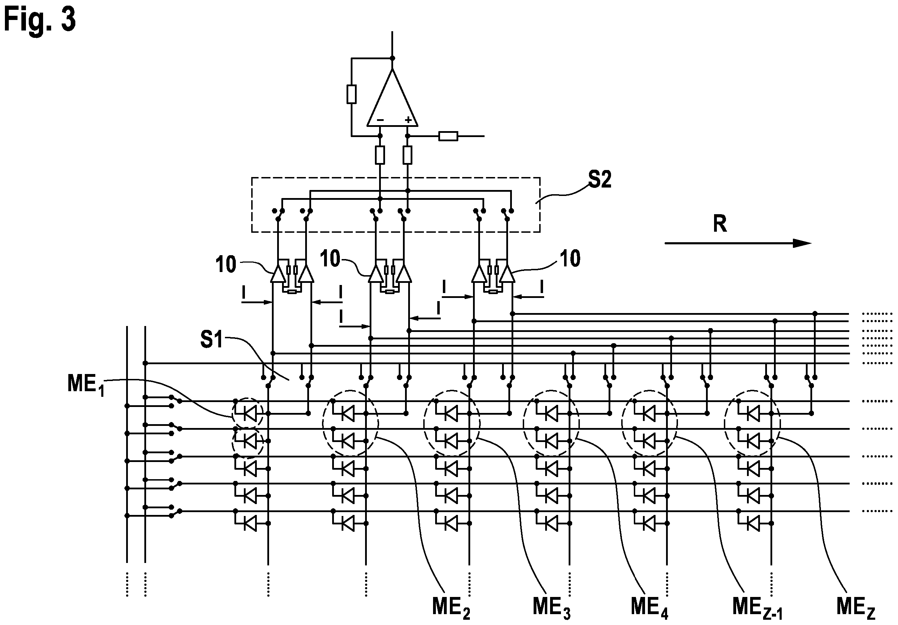

Fig. 2b zeigt einen ersten Takt des erfindungsgemäßen Verfahrens. Es ist in diesem Fall eine Gruppe von drei Messelementen ME₁...ME_{z} mittels der ersten Schalter S1 an die drei Verstärker 10 angeschaltet bzw. elektrisch verbunden. Es sind dies die Messelemente ME₁, ME_{z-1} und ME_{z}. Mittels eines geschlossenen zweiten Schalters S2 wird zwar ein Spannungsabfall am Messeelement ME_{z-1} mittels des Verstärkers 10 verstärkt und an der Ausleseposition A ausgegeben. Dies ist aber zu diesem Zeitpunkt ohne Relevanz, da es sich um einen Takt einer Vorkonditionierung bzw. Vorbestromung des Messelements ME₁ und des mit diesem Messelement elektrisch verbundenen Verstärkers 10 handelt. Durch diese Vorkonditionierung können sich das Messelement ME₁ und der Verstärker 10 einschwingen, wodurch eine ausreichende Zeit vor einem nachfolgenden Auslesevorgang bereitgestellt wird. In Fig. 2b ist angedeutet, dass eine Schalt- bzw. Taktfrequenz f der ersten Schalter S1 und eine Schalt- bzw. Taktfrequenz f der zweiten Schalter S2 im Wesentlichen identisch sind, wobei die Schalter S1,S2 dadurch synchron betätigt werden. Diese gegenseitige Zuordnung der Schaltfrequenzen f der Schalter S1,S2 ist in Fig. 2b exemplarisch dargestellt und gilt natürlich auch für die Anordnungen der Figuren 2c bis 2h und Fig. 3. Ferner sind in Fig. 2b Schaltrichtungen R der ersten Schalter S1 und der zweiten Schalter S2 mit einem Pfeil angedeutet. Die dargestellte Schaltrichtung hat zur Folge, dass jeweils ein erster Schalter S1, ausgehend vom ersten Messelement ME₁ bis zum letzten Messelement ME_{z}, sequentiell zu- und abgeschaltet wird.

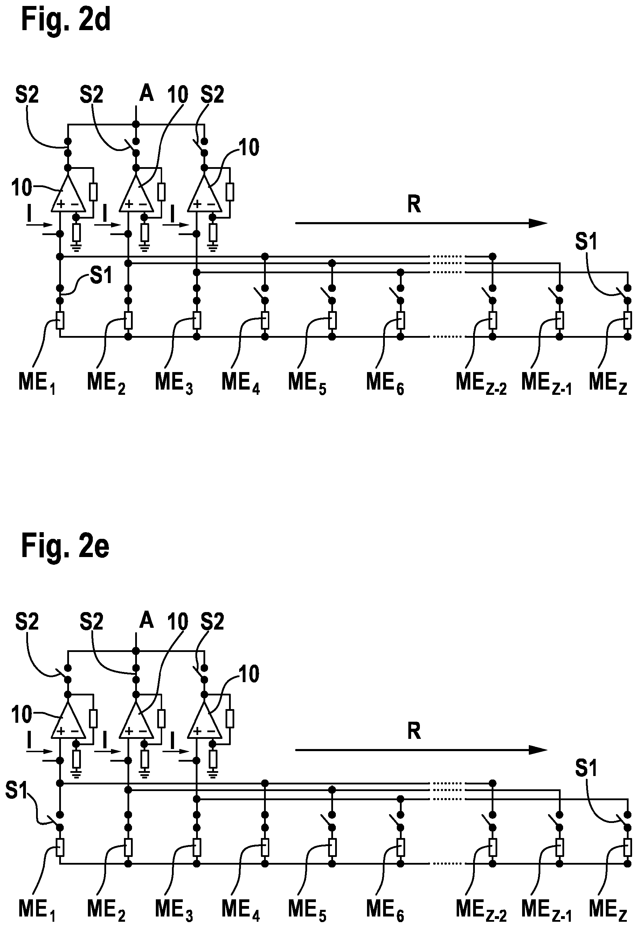

Fig. 2c zeigt einen weiteren Takt des erfindungsgemäßen Verfahrens. Man erkennt, dass nunmehr ein weiterer erster Schalter S1 geschlossen ist, der das Messelement ME₂ mit dem zugeordneten Verstärker 10 elektrisch verbindet. Analog wie im vorherigen Takt (siehe Fig. 2b) wird wiederum eine Gruppe von drei Messelementen mittels drei im Wesentlichen gleich großen Messströme I bestromt. Ein zweiter Schalter S2 an einem der Verstärker 10 gibt den Spannungsabfall des Messelements ME_{z} aus, wobei dieser Spannungsabfall zu diesem Zeitpunkt ohne Bedeutung ist. In den Fig. 2b und 2c sind nämlich Vorkonditionierungs- bzw. Vorbestromungstakte dargestellt, in denen erste Verstärker 10 und Messelemente zwar bestromt werden, die entsprechenden Spannungsabfälle der Messelemente jedoch nicht ausgelesen bzw. nicht verwendet werden. Auf diese haben sowohl der Verstärker 10 als auch das Messelement genügend Zeit um elektrisch einzuschwingen, so dass im nunmehr folgenden Takt (siehe nächste Fig. 2d) ein erster "richtiger" Messwert ausgelesen werden kann.

Fig. 2d zeigt im Prinzip einen weiteren Takt des erfindungsgemäßen Verfahrens, in welchem erstmals ein Spannungsabfall eines Messelements ausgelesen wird. Es ist erkennbar, dass in diesem Takt der erste Schalter S1 des Messelements ME₁ noch immer geschlossen ist, wobei nunmehr auch der zweite Schalter S2 an einem Ausgang des Verstärkers 10, der mit dem Messelement ME₁ elektrisch verbunden ist, geschlossen ist. Dadurch wird ein durch den Messstrom I erzeugter Spannungsabfall am Messelement ME₁ vom Verstärker 10 verstärkt und an die Ausleseposition A ausgegeben. Im Ergebnis bedeutet dies, dass in diesem Takt die Messelemente ME₂ und ME₃ für einen nachfolgenden Auslesevorgang vorkonditioniert bzw. vorbestromt werden. Das ausgelesene Messelement ME₁ und der zugeordnete Verstärker 10 hatten vor dem Auslesen insgesamt zwei Takte Zeit, um sich einzuschwingen (siehe Fig. 2b und Fig. 2c).

Fig. 2e zeigt auf prinzipielle Weise einen weiteren Takt des erfindungsgemäßen Verfahrens. Dabei wird der erste Schalter S1 des Messelements ME₁ wieder geöffnet, wohingegen der erste Schalter S1 des Messelements ME₄ geschlossen wird. Synchron dazu wird der zweite Schalter S2 des mit dem Messelement ME₂ elektrisch verbundenen Verstärkers 10 geschlossen, so dass der Spannungsabfall am Messelement ME₂ über den Verstärker 10 an die Ausleseposition A ausgegeben wird. Im dargestellten Takt der Fig. 2e werden also die Messelemente ME₃ und ME₄ und die mit diesen Messelementen elektrisch verbundenen Verstärker 10 jeweils mittels des Messstroms I vorkonditioniert.

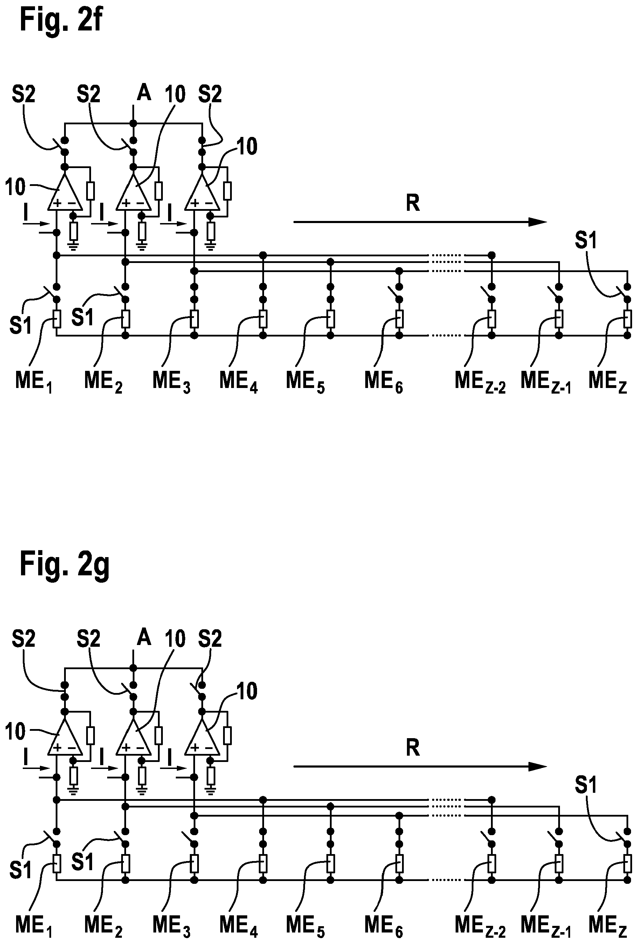

Fig. 2f zeigt prinzipiell einen weiteren Takt des erfindungsgemäßen Verfahrens. Dabei wird gegenüber dem Takt der Fig. 2e der erste Schalter S1 des Messelements ME₂ wieder geöffnet, wohingegen der erste Schalter S1 des Messelements ME₅ in Schaltrichtung R geschlossen wird. Synchron dazu wird der zweite Schalter S2 des mit dem Messelement ME₃ verbundenen Verstärkers 10 geschlossen, so dass der Spannungsabfall an diesem Messelement über den Verstärker 10 an die Ausleseposition A ausgegeben wird. Im Ergebnis wird somit das Messelement ME₃ ausgelesen, und die Messelemente ME₄ (ein weiteres Mal) und ME₅ (erstmals) vorkonditioniert bzw. vorbestromt.

Fig. 2g zeigt prinzipiell einen weiteren Takt des erfindungsgemäßen Verfahrens. Dabei wird der erste Schalter S1 des Messelements ME₃ wieder geöffnet, wobei der erste Schalter S1 des Messelements ME₆ geschlossen wird. Synchron dazu wird der zweite Schalter S2 des mit dem Messelement ME₄ verbundenen Verstärkers 10 geschlossen, so dass der Spannungsabfall an diesem Messelement über den Verstärker 10 verstärkt an der Ausleseposition A ausgegeben wird. Im Ergebnis wird also das Messelement ME₄ ausgelesen, wohingegen die Messeelemente ME₅ (nochmals) und ME₆ (erstmals) vorkonditioniert bzw. vorbestromt werden.

Nicht in den Figuren dargestellt ist das Auslesen der Messelemente ME₅ bis ME_{Z-1} bzw. die dazu entsprechenden Vorkonditionierung von anderen Messelementen mit den zugeordneten Verstärkern 10.

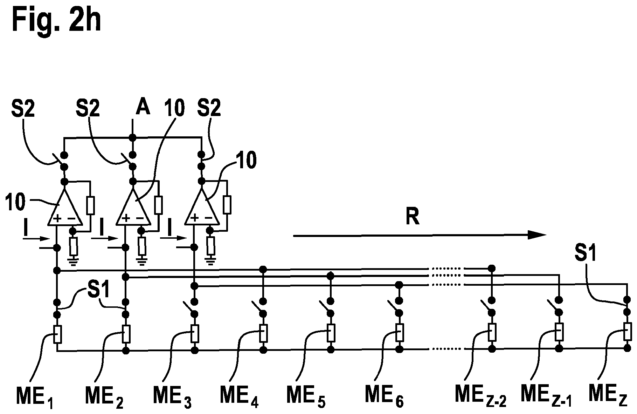

Fig. 2h zeigt prinzipiell einen weiteren Takt des erfindungsgemäßen Verfahrens, wobei das letzte Messelement der Reihe, nämlich das Messelement ME_{z} in der oben beschriebenen Art und Weise ausgelesen und die Messelemente ME₁ und ME₂ mit ihren zugeordneten Verstärkern 10 zum Zwecke des Einschwingens vorkonditioniert bzw. vorbestromt werden.

Aus den Figuren 2a bis 2h ist als ein allgemeines Prinzip also erkennbar, dass die Bestromung der Messelemente und der mit ihnen elektrisch verbundenen Verstärker 10 nicht nur zum Auslesezeitpunkt bzw. -takt, sondern bereits vorher in einer Vorkonditionierungsphase über mehrere (1 bis N) Takte hinweg mit jeweils einem angeschlossenen und bandbreitenreduzierten Verstärker 10 durchgeführt wird. Über den 3-zu-1 Multiplexer in Form der zweiten Schalter S2 werden die verstärkten Signale dann im Auslesetakt, der dem Schalttakt der ersten Schalter S1 entspricht, ausgegeben.

Dadurch resultiert vorteilhaft eine Verlängerung der Einschwingzeiten für die Messelemente und für die jeweils angeschlossenen Verstärker. Vorteilhaft kann dadurch die Genauigkeit des ausgelesenen Messsignals beträchtlich erhöht sein. Ferner können durch die längeren Einschwingzeiten vorteilhaft auch die Bandbreiten der Verstärker 10 reduziert werden, ohne dadurch ungenau zu werden. Aus der Verringerung der Bandbreite der Verstärker 10 resultieren vorteilhaft eine Verringerung des Rauschens und damit eine genauere Ausgabe des Messsignals. Das erfindungsgemäße Verfahren ist je nach Anforderung skalierbar, wobei eine Anzahl von zwei bis N Verstärkern 10 verwendet werden können. Für jeden zusätzlichen Takt wird dabei lediglich ein zusätzlicher Verstärker 10 benötigt.

Beim erfindungsgemäßen Verfahren werden also stets N Messelemente ME₁...ME_{z} mit N Verstärkern 10 gleichzeitig elektrisch verbunden, wobei ein N-zu-1 Multiplexer aus zweiten Schaltern S2 das verstärkte Messsignal selektiv durchschaltet. Dadurch können die Verstärker 10, abhängig von der Anzahl N in ihrer Bandbreite stärker als beim konventionellen Verfahren begrenzt werden.

Beim ersten Takt des erfindungsgemäßen Verfahrens (siehe Fig. 2b) werden bei einer Anzahl von N Verstärkern 10 das erste Messelement ME₁ und zum Zwecke einer Symmetrierung von Strömen in einer Sammelleitung der Messelemente auch die letzten N-1 Messelemente einer Reihe von Messelementen bestromt. Durch das zusätzliche Verbinden der letzten N-1 Messelemente ergibt sich vorteilhaft eine stets gleichmäßige Strombilanz von drei Messströmen in der Sammelleitung der Messelemente. Dies ist insbesondere in einem mehrreihigen Feld von Messelementen von Vorteil, wenn die Sammelleitungen mittels Schalter (in integrierten Schaltungen sind dies in der Regel Transistoren, die durch die Bestromung einen Spannungsabfall erzeugen) auf z.B. eine Referenzspannung geschaltet werden.

Beim erfindungsgemäßen Verfahren ist der erste "gültige" Wert nach N Takten an der Ausleseposition A verfügbar. Dies bedeutet, dass bei mehreren Reihen von Messelementen, die nacheinander elementweise durchgeschaltet werden, dass in jeder Reihe der Messelemente die ersten N-1 Takte ungültig sind bzw. verworfen werden.

Obwohl die Messelemente ME₁...ME_{z} in allen Figuren durch ohmsche Widerstände repräsentiert sind, ist es natürlich auch denkbar, dass andere Typen von Messelementen verwendet werden (z.B. temperatur- oder infrarotempfindliche Dioden, etc.).

Das Verfahren gemäß der vorliegenden Erfindung ist vorteilhaft auch für ein serielles Auslesen von differentiellen Messsignalen geeignet. Fig. 3 zeigt eine Anordnung, in der diese weitere Ausführungsform des erfindungsgemäßen Verfahrens durchführbar ist.

Fig. 3 zeigt ein mehrreihiges Feld von Messelementen ME₁...ME_{z}, die als infrarotempfindliche Dioden ausgebildet sind, deren Erwärmung mittels InfrarotEinstrahlung gemessen wird. Die dabei generierten elektrischen Spannungen sind sehr klein, so dass mittels des erfindungsgemäßen Verfahrens keine absoluten Spannungswerte gemessen werden können. Aus diesem Grund ist bei dieser Ausführungsform des Verfahrens eine Messung von differentiellen Signalen vorgesehen. Beispielsweise kann die Anordnung von Fig. 3 als ein Diodenarray mit 100 x 50 Pixel mit einer Verstärkerschaltung für eine Wärmebildkamera ausgebildet sein.

Ein in der ersten Reihe des Feldes angeordnetes Messelement ME₁ misst eine elektrische Differenzspannung zwischen einer Referenzdiode und einem eigentlichen Messelement (Messdiode). Die Referenzdioden der Messelemente ME₁...ME_{z} sind solche, die bei Infraroteinstrahlung keine Temperaturerhöhung erfahren. Drei Verstärker 10 sind als Differenzverstärker ausgebildet, die Differenzspannungen zwischen den bestromten Referenzdioden und den bestromten Messdioden ermitteln. Ein 3-zu-1 Multiplexer in Form von zweiten Schaltern S2 ist in einer linken Position, wobei die zweiten Schalter S2 den zweiten Schaltern S2 der prinzipiellen Darstellungen der Fig. 2a bis 2h entsprechen. Im Ergebnis wird in der Anordnung der Fig. 3 das erste Messelement ME₁ die Differenzspannung über den ersten Schalter S1 an den Verstärker 10 angeschaltet, mittels des zweiten Schalters S2 ausgelesen und danach endverstärkt.

Die prinzipielle Wirkungsweise des Verfahrens ist in der Anordnung von Fig. 3 dieselbe wie in den Anordnungen der Fig. 2a bis 2h. Dies bedeutet, dass die ersten Schalter S1 sequentiell in einer Schaltrichtung R geschaltet werden, wobei eine Bestromung der Messelemente abhängig von der Anzahl N der Verstärker 10 bereits N-1 Takte vor dem Auslesezeitpunkt des Messsignals erfolgt. Eine Abarbeitung des Verfahrens erfolgt für das gesamte Feld reihenweise, so dass zuerst die Messelemente ME₁...ME_{z} der ersten Reihe abgearbeitet werden, danach jene der zweiten Reihe usw.

Zusammenfassend wird mit der Erfindung ein getaktetes, synchrones, serielles Verfahren zum Auslesen von elektrischen Messelementen vorgeschlagen. Mittels des erfindungsgemäßen Verfahrens ist es vorteilhaft möglich, die verwendeten Verstärker bandbreitenreduziert auszubilden, wodurch eine genauere, im Wesentlichen rauschunterdrückte Ausgabe der Messwerte mit einer kosteneffizienten Ausgestaltung der Verstärker erreicht werden kann. Durch die Bandbreitenreduktion kann eine Frequenz definiert werden, die der Verstärker 10 noch übertragen kann. Als vorteilhafte Folge einer Anwendung von Infrarotdioden als Messelemente kann eine verbesserte Auflösung von Wärmebildern resultieren. Für diesen spezifischen Anwendungsfall hat sich als günstig herausgestellt, drei Verstärker 10 zu verwenden, was für jedes Messelement ME₁...ME_{z} eine Vorkonditionierung von zwei Takten zur Folge hat.

Es versteht sich natürlich von selbst, dass die Anzahl 3 für die Verstärker 10 nach der obigen Beschreibung lediglich als beispielhaft anzusehen ist, wobei für die Ausführung des erfindungsgemäßen Verfahrens eine Mindestanzahl von zwei Verstärkern 10 erforderlich ist.

Der Fachmann wird die Merkmale der Erfindung entsprechend abändern oder miteinander kombinieren können, ohne vom durch die Ansprüche definierten Kern der Erfindung abzuweichen.

Beispielsweise wird er erkennen, dass die gezeigte Schaltrichtung R des Betätigens der Schalter S1 und S2 frei wählbar ist.

## Patentansprüche

1. Verfahren zum seriellen Auslesen von elektrischen Messelelementen (ME₁...ME_{z}), wobei elektrische Spannungen der Messelemente (ME₁... ME_{z}) mittels wenigstens zweier elektrischer Verstärker (10) und Schalter (S1 ,S2) getaktet ausgelesen werden, wobei Spaltenstrukturen der Messelemente (ME₁...ME_{z}) entsprechend einem Schaltschema der Verstärker (10) miteinander und mit jeweils einem der Verstärker (10) verschaltbar sind, aufweisend die Schritte:
- Bestromen wenigstens zweier Messelemente (ME₁... ME_{z}) mit im Wesentlichen gleich großen Strömen und im Wesentlichen gleichzeitiges elektrisches Verbinden der wenigstens zwei bestromten Messelemente (ME₁... ME_{z}) mit jeweils einem Verstärkereingang mittels jeweils eines ersten Schalters (S1);
- Getaktetes Schalten zweier erster Schalter (S1) in eine Schaltrichtung (R), wobei im Wesentlichen gleichzeitig ein weiteres Messelement (ME₁...ME_{z}) mittels eines ersten Schalters (S1) mit einem Verstärker (10) elektrisch verbunden und mittels eines ersten Schalters (S1) ein mit einem Verstärker (10) elektrisch verbundenes Messselement (ME₁...ME_{z}) vom Verstärker (10) elektrisch getrennt wird; **gekennzeichnet durch** die Schritte:
- Zum Schalten der zwei ersten Schalter (S1) im Wesentlichen synchrones getaktetes Schalten zweier mit Ausgängen der Verstärker (10) elektrisch verbundener zweiter Schalter (S2) in Schaltrichtung (R), wobei im Wesentlichen gleichzeitig ein Ausgang des Verstärkers (10) mittels eines zweiten Schalters (S2) mit einer Ausleseposition (A) elektrisch verbunden und ein Ausgang eines weiteren Verstärkers (10) mittels eines zweiten Schalters (S2) von der Ausleseposition (A) elektrisch getrennt wird, wobei jedes Messelement (ME₁... ME_{z}) vor dem Auslesen wenigstens einen Takt lang bestromt wird;
- wobei jedes der Messelemente (ME₁... ME_{z}) eine gleiche Anzahl an Takten lang vorbestromt wird, wobei die Anzahl der Takte der Vorbestromungen für jedes Messelement (ME₁...ME_{z}) gleich der Anzahl N der Verstärker (10) ist.

2. Verfahren nach Anspruch 1, wobei eine Anzahl der Verstärker (10) von 2 bis N skalierbar ist, wobei für jeden Takt eines Bestromens der Messelemente (ME₁... ME_{z}) vor dem Auslesen ein zusätzlicher Verstärker (10) vorgesehen ist.

3. Verfahren nach Anspruch 1 oder 2, wobei die Messelemente (ME₁...ME_{z}) in wenigstens zwei Reihen angeordnet sind, wobei das Verfahren für jede Reihe nacheinander ausgeführt wird.

4. Verfahren nach einem der Ansprüche 1 bis 3, wobei die Verstärker (10) derart dimensioniert sind, dass sie Frequenzen nur bis zu einer vorbestimmten Frequenz übertragen.

5. Verfahren nach einem der Ansprüche 1 bis 4, wobei mittels der ersten Schalter (S1) differenzielle Eingangssignale an die Verstärker (10) angeschaltet werden.

6. Vorrichtung zum seriellen Auslesen von elektrischen Messelementen (ME₁...ME_{z}) aufweisend erste und zweite Schalter (S1,S2) und wenigstens zwei elektrische Verstärker (10),
- wobei Spaltenstrukturen der Messelemente (ME₁... ME_{z}) entsprechend einem Schaltschema der Verstärker (10) miteinander und mit jeweils einem der Verstärker (10) verschaltbar sind
- wobei wenigstens zwei im Wesentlichen gleich bestromte Messelemente (ME₁...ME_{z}) mittels jeweils eines ersten Schalters (S1) mit jeweils einem Eingang eines der elektrischen Verstärker (10) verbindbar sind;
- wobei elektrische Spannungen der Messelemente (ME₁... ME_{z}) mittels der elektrischen Verstärker (10) und der Schalter (S1,S2) getaktet auslesbar sind;
- wobei mittels zweier in eine Schaltrichtung (R) getaktet schaltbarer erster Schalter (S1) im Wesentlichen gleichzeitig ein weiteres Messelement (ME₁... ME_{z}) mittels eines der ersten Schalter (S1) mit einem der Verstärker (10) elektrisch verbindbar und mittels eines der ersten Schalter (10) ein mit einem anderen der Verstärker (10) elektrisch verbundenes Messelement (ME₁...ME_{z}) vom anderen Verstärker (10) elektrisch trennbar ist;
- wobei wenigstens zwei zweite Schalter (S2) mit Ausgängen der Verstärker (10) elektrisch verbindbar und zum Schalten der zwei ersten Schalter (S1) im Wesentlichen synchron in Schaltrichtung (R) getaktet schaltbar sind;
- wobei im Wesentlichen gleichzeitig ein Ausgang eines der Verstärker (10) mittels eines der zweiten Schalter (S2) mit einer Ausleseposition (A) elektrisch verbindbar und ein Ausgang eines weiteren der Verstärker (10) mittels eines weiteren der zweiten Schalter (S2) von der Ausleseposition (A) elektrisch trennbar ist;
- wobei jedes Messelement (ME₁... ME_{z}) vor dem Auslesen wenigstens einen Takt lang bestrombar ist, **dadurch gekennzeichnet, dass** die Vorrichtung so konfiguriert ist, dass
- jedes der Messelemente (ME₁... ME_{z}) eine gleiche Anzahl an Takten lang vorbestromt wird, wobei die Anzahl der Takte der Vorbestromungen für jedes Messelement (ME₁...ME_{z}) gleich der Anzahl N der Verstärker (10) ist.

7. Vorrichtung nach Anspruch 6, wobei jedes der Messelemente (ME₁...ME_{z}) jeweils eine strahlungsempfindliche Referenzdiode und eine strahlungsunempfindliche Referenzdiode und eine strahlungsempfindliche Messdiode aufweist, wobei mittels eines als Differenzverstärker ausgebildeten Verstärkers (10) Differenzspannungen zwischen den Referenzdioden und den Messdioden getaktet auslesbar sind.

8. Wärmebildkamera mit einer Vorrichtung nach Anspruch 7.

## Claims

1. Method for reading electrical measurement elements (ME₁...ME_{z}) serially, wherein voltages of the measurement elements (ME₁...ME_{z}) are read in a clocked manner by means of at least two electrical amplifiers (10) and switches (S1, S2), wherein column structures of the measurement elements (ME₁...ME_{z}) can be interconnected with one another and with a respective one of the amplifiers (10) in accordance with a circuit diagram of the amplifiers (10), having the steps:
- energization of at least two measurement elements (ME₁...ME_{z}) with currents of essentially the same magnitude, and essentially simultaneous electrical connection of the at least two energized measurement elements (ME₁...ME_{z}) to a respective amplifier input by means of a respective first switch (S1);
- clocked switching of two first switches (S1) in a switching direction (R), wherein a further measurement element (ME₁...ME_{z}) is electrically connected to an amplifier (10) by means of a first switch (S1), and a measurement element (ME₁...ME_{z}) electrically connected to an amplifier (10) is electrically isolated from the amplifier (10) by means of a first switch (S1) essentially simultaneously, **characterized by** the steps:
- for switching the two first switches (S1), essentially synchronous clocked switching of two second switches (S2) electrically connected to outputs of the amplifiers (10) in the switching direction (R), wherein an output of the amplifier (10) is electrically connected to a reading position (A) by means of a second switch (S2), and an output of a further amplifier (10) is electrically isolated from the reading position (A) by means of a second switch (S2) essentially simultaneously, wherein each measurement element (ME₁...ME_{z}) is energized before the reading for the duration of at least one clock cycle;
- wherein each of the measurement elements (ME₁...ME_{z}) is pre-energized for the duration of the same number of clock cycles, wherein the number of clock cycles of the pre-energizing is equal to the number N of amplifiers (10) for each measurement element (ME₁...ME_{z}).

2. Method according to Claim 1, wherein a number of amplifiers (10) can be scaled from 2 to N, wherein an additional amplifier (10) is provided for each clock cycle of energizing the measurement elements (ME₁...ME_{z}) before the reading.

3. Method according to Claim 1 or 2, wherein the measurement elements (ME₁...ME_{z}) are arranged in at least two rows, wherein the method is performed for each row in succession.

4. Method according to one of Claims 1 to 3, wherein the amplifiers (10) are dimensioned in such a way that they transmit frequencies of only up to a predetermined frequency.

5. Method according to one of Claims 1 to 4, wherein differential input signals are connected to the amplifiers (10) by means of the first switches (S1).

6. Device for reading electrical measurement elements (ME₁...ME_{z}) serially, having first and second switches (S1, S2) and at least two electrical amplifiers (10),
- wherein column structures of the measurement elements (ME₁...ME_{z}) can be interconnected with one another and with a respective one of the amplifiers (10) in accordance with a circuit diagram of the amplifiers (10),
- wherein at least two substantially equally energized measurement elements (ME₁...ME_{z}) can be connected to a respective input of one of the electrical amplifiers (10) by means of a respective first switch (S1);
- wherein voltages of the measurement elements (ME₁...ME_{z}) can be read in a clocked manner by means of the electrical amplifiers (10) and the switches (S1, S2);
- wherein, by means of two first switches (S1) that can be switched in a clocked manner in a switching direction (R), a further measurement element (ME₁...ME_{z}) can be electrically connected to one of the amplifiers (10) by means of one of the first switches (S1), and a measurement element (ME₁...ME_{z}) electrically connected to another of the amplifiers (10) can be electrically isolated from the other amplifier (10) by means of one of the first switches (10) essentially simultaneously;
- wherein at least two second switches (S2) can be electrically connected to outputs of the amplifiers (10) and, for switching the two first switches (S1), can be switched in a clocked manner in the switching direction (R) essentially synchronously;
- wherein an output of one of the amplifiers (10) can be electrically connected to a reading position (A) by means of one of the second switches (S2), and an output of a further one of the amplifiers (10) can be electrically isolated from the reading position (A) by means of a further one of the second switches (S2) essentially simultaneously;
- wherein each measurement element (ME₁...ME_{z}) can be energized before the reading for the duration of at least one clock cycle, **characterized in that** the device is configured such that
- each of the measurement elements (ME₁...ME_{z}) is pre-energized for the duration of the same number of clock cycles, wherein the number of clock cycles of the pre-energizing is equal to the number N of amplifiers (10) for each measurement element (ME₁...ME_{z}).

7. Device according to Claim 6, wherein each of the measurement elements (ME₁...ME_{z}) respectively has a radiation-sensitive reference diode and a radiation-insensitive reference diode and a radiation-sensitive measuring diode, wherein differential voltages between the reference diodes and the measuring diodes can be read in a clocked manner by means of an amplifier (10) in the form of a differential amplifier.

8. Thermal imaging camera having a device according to Claim 7.

## Revendications

1. Procédé de lecture en série d'éléments de mesure électriques (ME₁ ... ME_{z}), des tensions électriques des éléments de mesure (ME₁ ... ME_{z}) étant lues de manière cadencée au moyen d'au moins deux amplificateurs électriques (10) et commutateurs (S1, S2), des structures de colonnes des éléments de mesure (ME₁ ... ME_{z}) pouvant être commutées les unes avec les autres et respectivement avec l'un des amplificateurs (10) selon un schéma de commutation des amplificateurs (10), présentant les étapes consistant à :
- alimenter au moins deux éléments de mesure (ME₁ ... ME_{z}) en courants substantiellement identiques, et relier électriquement de manière substantiellement simultanée les au moins deux éléments de mesure (ME₁ ... ME_{z}) alimentés à respectivement une entrée d'amplificateur au moyen d'un premier commutateur (S1) respectivement ;
- commuter de manière cadencée deux premiers commutateurs (S1) dans une direction de commutation (R), un autre élément de mesure (ME₁ ... ME_{z}) étant de manière substantiellement simultanée relié électriquement à un amplificateur (10) au moyen d'un premier commutateur (S1), et un élément de mesure (ME₁ ... ME_{z}) relié électriquement à un amplificateur (10) étant séparé électriquement de l'amplificateur (10) au moyen d'un premier commutateur (S1);
**caractérisé par** les étapes consistant à :
- pour la commutation des deux premiers commutateurs (S1), commuter de manière cadencée et substantiellement synchrone deux commutateurs (S2) reliés électriquement à des sorties des amplificateurs (10) dans la direction de commutation (R), dans lequel, de manière substantiellement simultanée, une sortie de l'amplificateur (10) est reliée électriquement à une position de lecture (A) au moyen d'un deuxième commutateur (S2), et une sortie d'un autre amplificateur (10) est séparée électriquement de la position de lecture (A) au moyen d'un deuxième commutateur (S2), chaque élément de mesure (ME₁ ... ME_{z}) étant alimenté pendant au moins une cadence avant la lecture ;
- chacun des éléments de mesure (ME₁ ... ME_{z}) étant alimenté préalablement pendant un même nombre de cadences, le nombre des cadences des alimentations préalables étant pour chaque élément de mesure (ME₁ ... ME_{z}) égal au nombre N des amplificateurs (10).

2. Procédé selon la revendication 1, dans lequel un nombre des amplificateurs (10) est modulable de 2 à N, une alimentation des éléments de mesure (ME₁ ... ME_{z}) étant prévue pour chaque cadence avant la lecture d'un amplificateur (10) supplémentaire.

3. Procédé selon la revendication 1 ou 2, dans lequel les éléments de mesure (ME₁ ... ME_{z}) sont disposés sur au moins deux rangées, le procédé étant réalisé successivement pour chaque rangée.

4. Procédé selon l'une quelconque des revendications 1 à 3, dans lequel les amplificateurs (10) sont dimensionnés de telle sorte qu'ils ne transmettent des fréquences que jusqu'à une fréquence prédéterminée.

5. Procédé selon l'une quelconque des revendications 1 à 4, dans lequel les premiers commutateurs (S1) permettent de connecter des signaux d'entrée différentiels aux amplificateurs (10).

6. Dispositif de lecture en série d'éléments de mesure électriques (ME₁ ... ME_{z}), présentant des premiers et deuxièmes commutateurs (S1, S2) et au moins deux amplificateurs électriques (10),
- des structures de colonnes des éléments de mesure (ME₁ ... ME_{z}) pouvant être commutées les unes avec les autres et respectivement avec l'un des amplificateurs (10) selon un schéma de commutation des amplificateurs (10),
- au moins deux éléments de mesure (ME₁ ... ME_{z}) alimentés de manière substantiellement identique pouvant être reliés au moyen respectivement d'un premier commutateur (S1) à respectivement une entrée d'un des amplificateurs électriques (10) ;
- des tensions électriques des éléments de mesure (ME₁ ... ME_{z}) pouvant être lues de manière cadencée au moyen des amplificateurs électriques (10) et des commutateurs (S1, S2) ;
- dans lequel au moyen de deux premiers commutateurs (S1) pouvant être commutés de manière cadencée dans une direction de commutation (R), un autre élément de mesure (ME₁ ... ME_{z}) peut être relié électriquement de manière substantiellement simultanée au moyen d'un des premiers commutateurs (S1) à l'un des amplificateurs (10), et au moyen d'un des premiers commutateurs (10), un élément de mesure (ME₁ ... ME_{z}) relié électriquement à un autre des amplificateurs (10) peut être séparé électriquement de l'autre amplificateur (10) ;
- au moins deux deuxièmes commutateurs (S2) pouvant être reliés électriquement à des sorties des amplificateurs (10) et pouvant être commutés de manière cadencée et substantiellement synchrone dans la direction de commutation (R) pour commuter les deux premiers commutateurs (S1);
- dans lequel, de manière substantiellement simultanée, une sortie d'un des amplificateurs (10) peut être reliée électriquement à une position de lecture (A) au moyen d'un des deuxièmes commutateurs (S2), et une sortie d'un autre des amplificateurs (10) peut être séparée électriquement de la position de lecture (A) au moyen d'un autre des deuxièmes commutateurs (S2) ;
- chaque élément de mesure (ME₁ ... ME_{z}) pouvant être alimenté pendant au moins une cadence avant la lecture,
**caractérisé en ce que** le dispositif est configuré de telle sorte que
- chacun des éléments de mesure (ME₁ ... ME_{z}) est alimenté préalablement pendant un même nombre de cadences, le nombre des cadences des alimentations préalables étant pour chaque élément de mesure (ME₁ ... ME_{z}) égal au nombre N des amplificateurs (10).

7. Dispositif selon la revendication 6, dans lequel chacun des éléments de mesure (ME₁ ... ME_{z}) présente respectivement une diode de référence sensible au rayonnement et une diode de référence insensible au rayonnement et une diode de mesure sensible au rayonnement, un amplificateur (10) réalisé sous la forme d'un amplificateur différentiel permettant de lire de manière cadencée des tensions différentielles entre les diodes de référence et les diodes de mesure.

8. Caméra thermique comprenant un dispositif selon la revendication 7.
